# EUROPEAN PATENT SPECIFICATION

(11) **EP 1 871 110 B1**
(45) Date of publication and mention of the grant of the patent: **03.06.2015**
(21) Application number: 04802509.2
(22) Date of filing: 22.12.2004
(51) Int. Cl.: H04N 7/14, H04N 7/15

(54) **A METHOD FOR TRANSMITTING THE MULTICHANNEL VIDEO SOURCES ON VIDEO CONFERENCING SYSTEM**
VERFAHREN ZUM SENDEN DER MEHRKANAL-VIDEOQUELLEN AUF EINEM VIDEOKONFERENZSYSTEM
PROCEDE DE TRANSMISSION DES SOURCES VIDEO MULTICANAUX SUR UN SYSTEME DE VISIOCONFERENCE

(43) Date of publication of application: 26.12.2007
(73) Proprietor: ZTE Corporation, Guangdong 518057 (CN)
(72) Inventor: TIAN, Zhiping, Shenzhen, Guangdong 518-057 (CN); LI, Hui, Shenzhen, Guangdong 518-057 (CN); ZHU, Xiaobin, Shenzhen, Guangdong 518-057 (CN)
(74) Representative: Novagraaf Technologies
(86) International application number: PCT/CN2004/001496
(87) International publication number: WO 2006/066454

(56) References cited:
- EP-A- 0 759 667
- EP-A- 1 071 234
- CN-A- 1 237 294
- CN-A- 1 445 998
- JP-A- 2002 077 876
- US-A1- 2003 095 177
- US-A1- 2004 008 741
- WILLEBEEK-LEMAIR M H ET AL: "ON MULTIPOINT CONTROL UNITS FOR VIDEOCONFERENCING" PROCEEDINGS OF THE CONFERENCE ON LOCAL COMPUTER NETWORKS, 2 October 1994 (1994-10-02), pages 356-364, XP000198030

## Description

### Technical Field

The present invention relates to the multimedia communication field, and more specifically, to a method for transmitting multi-channel video in a video conferencing system.

### Background Art

Video conferencing system is a system of distributing various types of information, such as images, voice, text and pictures, to each user via all kinds of communication transmission mediums to gather the geographically distributed users to communicate through many kinds of ways, such as video, audio, and so on. Therefore, people do not need to be convened from all around for conference, which not only saves time and money but also avoids traveling back and forth. Currently, the dominant video conferencing equipments at home and abroad almost adopt the international standards based on H series, mainly H.320 series and H.323 series. Video conferencing systems conforming to protocol H.320 are mainly applied to the networks based on circuit switching, such as El, V.35, ISDN, etc.. Video conferencing systems conforming to this standard have advantages of high stability and reliability, mature technical standard, abundant kinds of equipments, and exclusive network line, thus are welcomed by those who concern about high picture quality, stability and reliability. Moreover, video conferencing networks which are able to work worldwide and whose quality can be ensured generally apply video equipments based on protocol H.320 technique.

With the popularity of H.320 video conferencing system, more demands including transmitting two or even more channels of video are advanced. At present, there are two technical schemes found out, which will be described separately as follows:

One technical scheme is to superimpose the video of two or more channels, and then to encode and transmit the superimposed video. An example is the Chinese patent, No. 02106057.6 by Huawei Technologies Co., Ltd., entitled "Dual view system of the video conferencing terminal", which disclosed a method for transmitting dual video between video conferencing terminals. A multi-channel video controller is added between each channel video source and the encoder to process multi-channel video, and the processed video is transferred to the encoder to be encoded. It can be seen from this technical scheme that what is transmitted between video conferencing terminals is actually the video output from the multi-channel video controller, and the video is just single-channel video thus its transmission is not a real multi-channel video transmission.

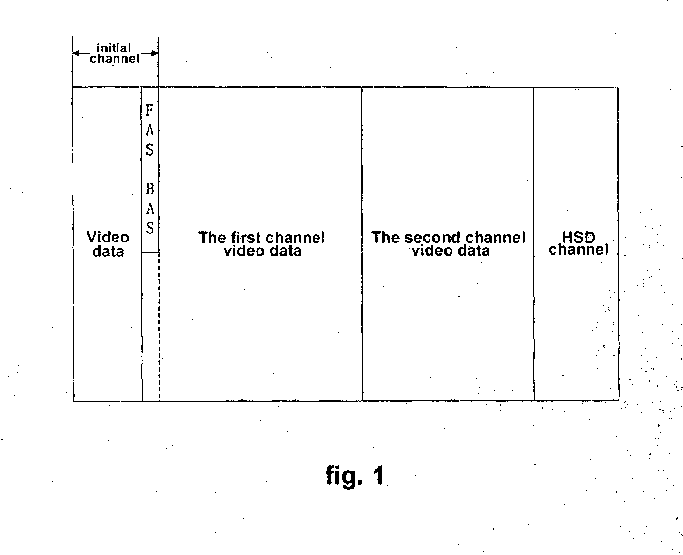

The other scheme is the ITU-T-based H.329 draft "Role Management and Additional Media Channels for H.300-series terminals". The basic idea of the scheme is: firstly, the bandwidth of a second channel video is obtained via the extended capability exchange; and then the channel occupation condition of the second channel video, including initial sub-slot and the end sub-slot, is calculated by combining call speed and HSD information; and finally two channel video data are transmitted in their corresponding channels respectively. The final H.221 frame structure is shown in Figure 1, wherein audio data, FAS, BAS and HSD are the same as those in the common H.221 frame structure, but the video data is separated into two parts, the first channel video and the second channel video data, to be transmitted via different time slots and sub-slots.

This scheme can realize a transmission of multi-channel video, yet its disadvantages are also very evident:
First, bit shifting operation is required when filling the corresponding channel with each channel video, which will increase the amount of calculation greatly. The more video channels are, the more amount of calculation is, resulting in the decreased efficiency of the system.
Second, the implementation is complex. The present protocol H.320, also MCU and the terminals should be largely modified when applying this scheme.
Third, the video rate can not be randomly set. Considering that the channels occupied by the bit rate of video of the second and subsequent channel uses sub-slot as a unit, and the bandwidth of each sub-slot is 8Kbps, therefore, the bit rate should be integral multiple of 8Kbps.
Fourth, the calculation of channel occupancy of each channel video is complex. Information about the first channel video and HSD, MLP and HMLP are needed to calculate the channel occupancy of the second channel video, then that of the third channel video, and so on.

### Summary of the Invention

The object of the present invention is to provide a method based on packet structure for transmitting multi-channel video in video conferencing systems to overcome the shortcomings in the prior art such as low system efficiency, complex implementation, inability of randomly setting the bit rate of each channel video, and complex calculation of the channel occupation parameters.

In order to achieve the above object, the present invention applies the technical scheme of:
a method of transmitting multi-channel video in video conference systems, in which each channel video is packaged separately and the resulting multiple packets are organized into a single data stream to fill into the frame structure for transmission.

Preferably, the method includes the following steps: said multi-channel video is multiplexed by packaging each channel video separately to produce a single data stream; said multiplexed multi-channel video data stream is mixed with other types of data to constitute a frame structure; said frame structure is sent to a receiving terminal via the network; said receiving terminal demultiplexes the single video data stream in the received frame structure to extract each channel video data.

Preferably, steps before said step of multiplexing includes: determining the condition of time slot and sub-slot distributed to the video data in the frame structure; calculating the whole bandwidth occupied by the video data according to the determined distribution condition of the time slot and sub-slot of video data; determining the number of video channels for transmission and the parameters of each channel video; encoding each channel video according to its determined parameters.

Preferably, said step of determining the time slot and sub-slot of video data is implemented between a sending terminal and MCU or between receiving terminals via capability exchange based on the protocol H.320.

Preferably, said step of determining the number of channels and the parameters of each video is implemented between a receiving terminal and MCU or between receiving terminals via the extended BAS code; the extended BAS code includes the number of channels, bit rate and video format of each channel video.

Preferably, said parameters of each video include bandwidth, video format, wherein the sum of bandwidth of each video may less than or equals to the calculated total bandwidth occupied by video.

Preferably, in said step of encoding, the bit rate of encoding in transmitting each channel video is the bit rate of the channel video multiplied by a conversion coefficient to take into consideration the bandwidth occupied by the packet header when packaging the channel video data, wherein the conversion coefficient is less than or equal to: the maximum number of transmittable valid data bits in one packet/ the packet length.

Preferably, said step of multiplexing further includes: packaging the data of each channel video into a packet with a fixed size; mixing the packaged data of each channel video using packet as the unit to create a single data stream.

Preferably, said packet of each channel video is composed of packet header with a fixed length, video data and filling bytes.

Preferably, said packet header includes: synchronization bit, which indicates the beginning of the packet to synchronize the packets; id, which indicates the type of the packet to distinguish the video channel that the packet comes from; serial number, which indicates the order of the packet in this type to detect whether this packet is sequential with the previous packets in the channel video; data length, which indicates the length of the valid video data carried in the packet.

Preferably, said serial number of the packet increases according to the order in which the data of the channel video are packaged.

Preferably, said filling bytes are used to fill the deficient part when the total length of the packet header and the video data does not reach said fixed length of the packet.

Preferably, said step of composing the frame structure further includes: filling the time slot and sub-slot corresponding to the video data in the determined bandwidth with the single data stream generated after multiplexing said multi-channel video; composing H.221 frame with said video data, other types of data and signaling H.320.

Preferably, before the step of said demultiplexing, it still includes: determining the condition of time slot and sub-slot distributed to the video data in the frame structure by said receiving terminal; determining the number of channels and the parameters of each channel video transmitted by said receiving terminal.

Preferably, said step of determining the condition of the time slot and sub-slot of video data is implemented between the receiving terminal and MCU or between receiving terminals via the process of capability exchange of protocol H.320.

Preferably, said step of determining the number of channels and the parameters of each channel video is implemented between said receiving terminal and MCU or between receiving terminals via the extended BAS code, which includes the number of channels, code rate of each channel video, and the video format.

Preferably, said step of demultiplexing further includes: extracting the video data from the received frame structure according to the corresponding time slot and sub-slot of the determined video data by said receiving terminal; searching for packet headers in each packet corresponding to each channel video in the extracted video data by said receiving terminal; extracting the valid video data carried in the packet according to the packet header information of each said packet by said receiving terminal.

Preferably, each packet of said video data is a packet with a fixed size, and each packet consists of a packet header with a fixed length, video data and the filling bytes.

Preferably, the packet header of each said packet includes: synchronization bit, which indicates the beginning of the packet and is used for synchronizing packets; id, which indicates the type of the packet and distinguishes channel video from which the packet comes; serial number, which indicates the order of the packet in this type and is used to detect whether this packet is sequential with the previous packets in the channel video; data length, which indicates the length of the valid video data carried in the packet.

Preferably, after said step of de-multiplexing, it still includes: said receiving terminal decodes each video data obtained by de-multiplexing the single video data in the received frame structure; said receiving terminal outputs each channel video data obtained by decoding.

The transmission of multi-channel video data in a video conferencing system can be easily realized by applying the method of transmitting multi-channel video in a video conferencing system in accordance with the present invention; moreover, and the code rate of each channel video can be randomly set. In contrast to the prior art, advantages of the technical scheme of the present invention are that:
1. in the method of the present invention, all of the video data are combined as a single video stream to be processed, therefore, the complexity of processing two channel video is the same as that of processing multi-channel video, thus increasing the system efficiency;
2. the implementation is simple, subtle modification is made to the present H.320 system, and only MCU and the terminals are modified a little.
3. the bandwidth of each channel video can be randomly set;
4. since all channel videos share one channel, it is simple to establish the channel.

### Description of Drawings

It is convinced that the description of the specific embodiments of the present invention with reference to the accompanying drawings would help to understand better the above features, advantages and object of the present invention.
Figure 1 is an illustration of H.221 frame structure created according to protocol H.329 in the prior art;
Figure 2 is a flow chart of the method for transmitting multi-channel video in video conferencing systems in accordance with the present invention;
Figure 3 is a flow chart of the processing at the sending terminal in accordance with one embodiment of the present invention;
Figure 4 is an illustration of packaging each channel video data in accordance with one embodiment of the present invention;
Figure 5 is an illustration of H.221 frame structure constituted in accordance with an embodiment of the present invention;
Figure 6 is a schematic diagram of multiplexing multi-channel video data in accordance with one embodiment of the present invention;
Figure 7 is a flow chart of the processing at the receiving terminal in accordance with one embodiment of the present invention;
Figure 8 is the schematic diagram of de-multiplexing multi-channel video data in accordance with one embodiment of the present invention.

### Preferred Embodiments of the Present Invention

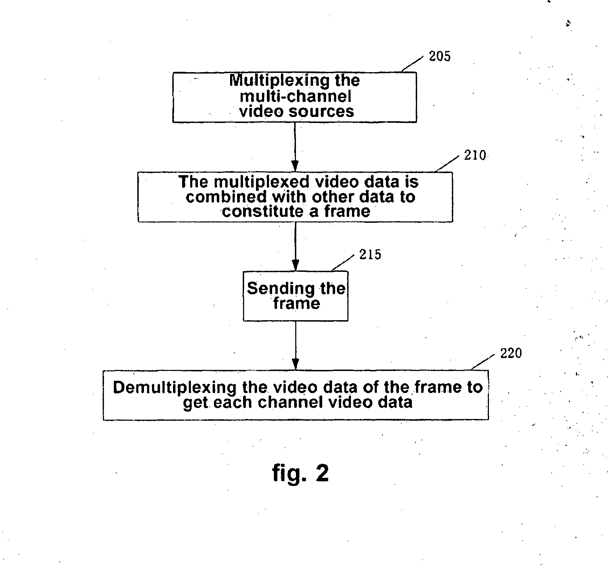

Figure 2 is a flow chart of the method of transmitting multi-channel video in video conference systems in accordance with the present invention. As shown in Figure 2, the main procedure of transmitting multi-channel video in the video conference systems according to the method offered in the present invention includes: in step 205, the method of separately packaging each channel video is applied to multiplex multi-channel video to create a single data stream; in step 210, the data stream generated by multiplexing multi-channel video is combined with other types of data to compose frame structure; in step 215, the frame structure is sent to the receiving terminal via network; and in step 220, the receiving terminal demultiplexes the single video data stream in the received frame structure to extract the video data from each channel.

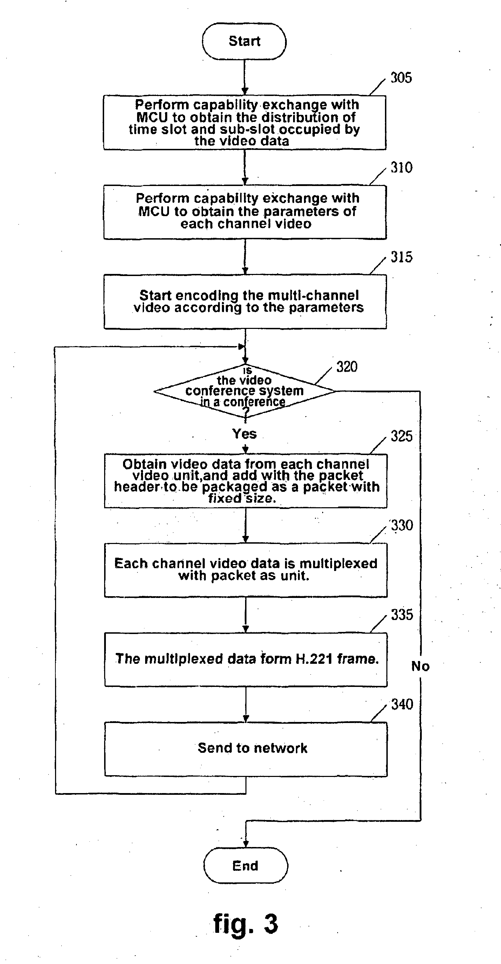

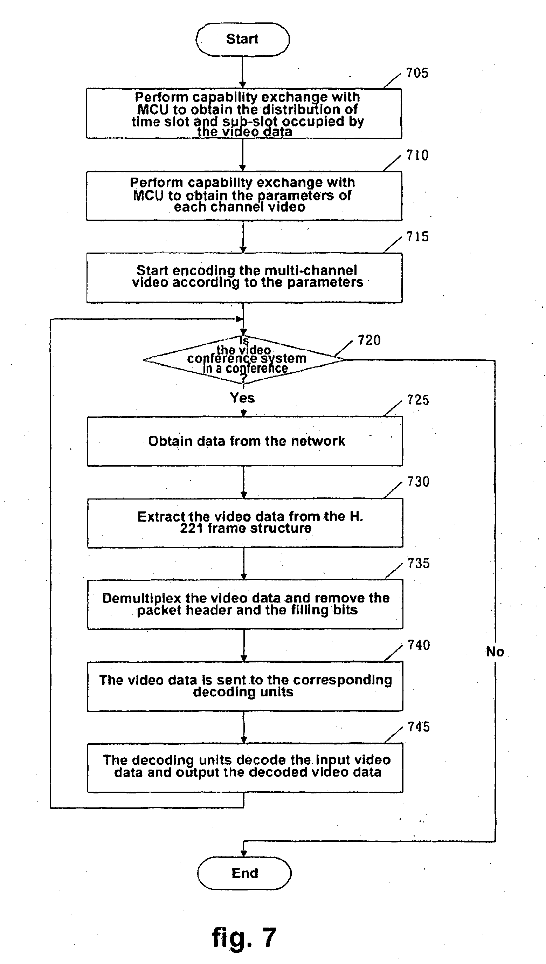

In one embodiment of the present invention, the conferencing bit rate is set at 1920Kbps to realize the transmission of two-channel video in video conferencing systems; the bit rate for one channel video is 1200Kbps, and the other is 640Kbps; no HSD exists; bit rate for audio is 56Kbps; LSD is 6.4Kbps. The sending terminal and the receiving terminal are connected via MCU. In this embodiment, the process of transmitting this two-channel video is divided into two processing flows at the sending terminal and at the receiving terminal, which will be described in reference to Figure 3 and Figure 7 respectively.

Figure 3 shows the processing flow at the sending terminal in this embodiment. As shown in Figure 3:

In step 305, the sending terminal performs capability exchange with MCU according to protocol H.320 to obtain the distribution condition of time slot and sub-slot occupied by the video data in the initial transmitting channel. Audio data occupies the first to the seventh sub-slots of the initial transmitting channel (1^{st} time slot); LSD data occupies all bandwidth except of audio data, FAS and BAS in the initial transmitting channel; the video data occupies the whole bandwidth of 2^{nd} to 30^{th} time slots of the channel, therefore the total bandwidth of the video is 1856Kbps.

In step 310, the sending terminal and MCU perform the extended capability exchange to obtain the parameters of each channel video, the bit rate of the first channel video is 1200Kbps, and that of the second channel is 640Kbps. The sum of bit rate of the two channel video is 1840Kbps, less than the total available bandwidth of the video.

In step 315, the sending terminal starts encoding the two channel video according to the parameters of each channel video. Considering that the packet header will occupy part of bandwidth when packaging the video data, thus the bit rate of the video transmitted to each encoding unit is the bit rate of each channel video obtained in step 310 multiplied by the conversion coefficient. From the packet structure applied for packaging each channel video data in the embodiment, it can be seen that the transmission efficiency of each channel video is (200-4)/200=98%, which will be used as the conversion coefficient, then the bit rate of the first channel video is 1176Kbps, and that of the second channel is 627Kbps. The converted bit rates are transmitted to two channel encoding units to encode the two channel video data.

In step 320, whether the video conference system is now in a conference is determined. If yes, the processing flow is forwarded to step 325, otherwise, the processing flow is ended.

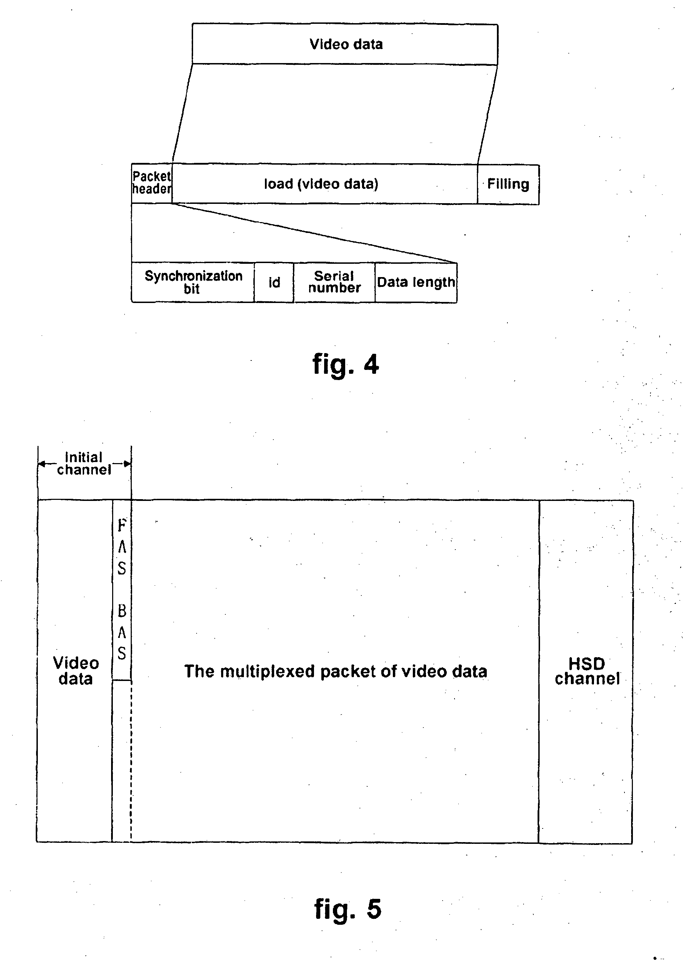

In step 325, each channel video data is packaged. In this embodiment, the applied packet structure is: the packet header occupies 4 bytes; the packet length is 200 bytes. The 4-byte packet header is added to the encoded video data obtained from the encoding unit of each channel video to generate a 200-byte packet. Figure 4 illustrates the process of packaging each channel video data in accordance with the embodiment. As shown in Figure 4, the packet header of the packet structure includes: synchronization bit, id, serial number and data length. The following table 1 indicates the meanings of the information of each part of the packet header in the embodiment.

**Table 1**

| Order | Field name | Meaning |
|---|---|---|
| 1 | Synchronization bit | to indicate the beginning of the packet, used for the synchronization of the packet |
| 2 | id | to Indicate the type of the packet and used to distinguish the channel from which the video comes |
| 3 | Serial number | to indicate the order of packet of this type and used for the receiving terminal to detect whether the packet is sequential |
| 4 | Data Length | to indicate the valid data length carried in the packet |

Wherein, the synchronization header in the packet header is 1 byte, fixed as 0x47; the id is 1 byte, and its value ranges from 1 to 255, wherein 255 is the id for filling an empty packet when the length of the video data is not enough to ensure the bit rate constant in the packet; the serial number is 1 byte, and its value ranges from 0 to 255, and the initial value is 0, the serial number increases one whenever a packet of the same type is sent and restarts from 0 when reaching the maximum value; the data length is 1 byte, its value ranges from 0 to 196, and 0 represents that all the bytes are the filling bytes; 196 represents that all bytes in the packet are valid data except packet header, and the values between 0 and 196 represent that there are both valid data and filling bytes in the packet. The filling bytes are used to fill the deficient part when the sum of video data and the packet header does not reach the whole length of the packet, and are fixed as 0xFF.

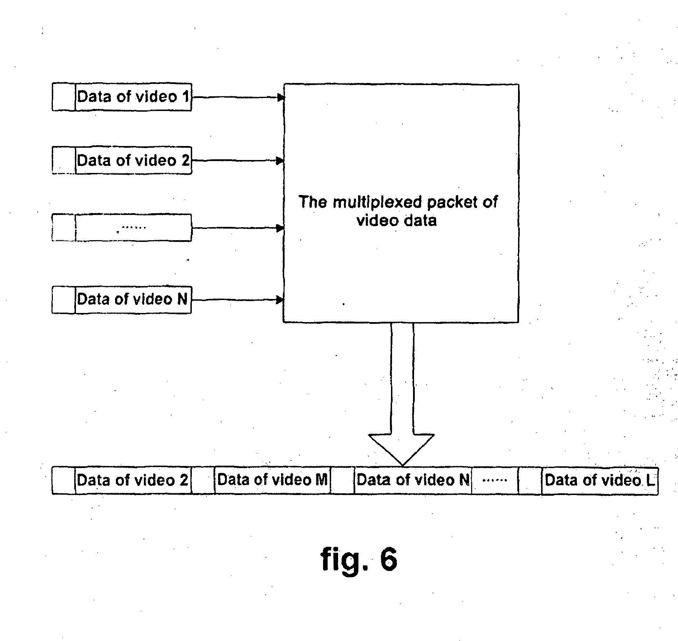

In step 330, the packaged video data from the two channels are mixed using packet as a unit, and multiplexed to generate a single data stream. Figure 6 is the schematic diagram of multiplexing multi-channel video data in accordance with the embodiment, wherein the packaged video data from each channel are multiplexed via the multi-channel video multiplexing unit to create a single bit-stream with packet as unit.

In step 335, the multiplexed data stream is put into the corresponding determined time slot according to the frame structure of H.221, forming H.221 frame together with other data. According to the result obtained in step 305, the multiplexed data stream should occupy No.2 to No.30 time slots, and Figure 5 is an illustration of H.221 frame structure constituted in accordance with the embodiment. In addition, idle packet should be filled with when there is no enough data to ensure a stable 1856Kbps of the output bit rate.

In step 340, framed H.221 data is sent to the network by the sending terminal.

Figure 7 shows a processing flow at the receiving terminal in this embodiment. As shown in Figure 7:

In step 705, the receiving terminal performs exchange capacity with MCU in accordance with protocol H.320 to obtain the distribution condition of time slot and sub-slot occupied by video data in transmitting channels. The result is accordant with that in step 305: all bandwidth of No.2∼No.30 time slots is occupied by video data and the total bandwidth is 1856 kbps.

In step 710, the receiving terminal and MCU exchange the extended capability to obtain the parameters of each channel video. The bit rate of the first channel video is 1200Kbps, and that of the second channel video is 627Kbps. The total bit rate of the two channels is 1840 Kbps, less than the total available video bandwidth.

In step 715, the receiving terminal starts decoding the two channel video in accordance with the video parameter of each channel. The calculation process is the same as that in step 315 and so do the results. The bit rate of the first channel video is 1176 Kbps and 627 Kbps for the send channel video. The converted bit rate is transmitted to the decoding units of the two channels to decode the video data of the two channels.

In step 720, whether video conferencing system is now in a conference is determined. If yes, then the processing flow is forwarded to step 725, otherwise the processing flow ends.

In step 725, data are received from the network.

In step 730, the receiving terminal extracts video data from the received H.221 frame. From step 705, it can be seen that the video data occupies No.2 to No.29 time slots. The data of these time slots are sequentially extracted and saved in the receiving buffer of the video.

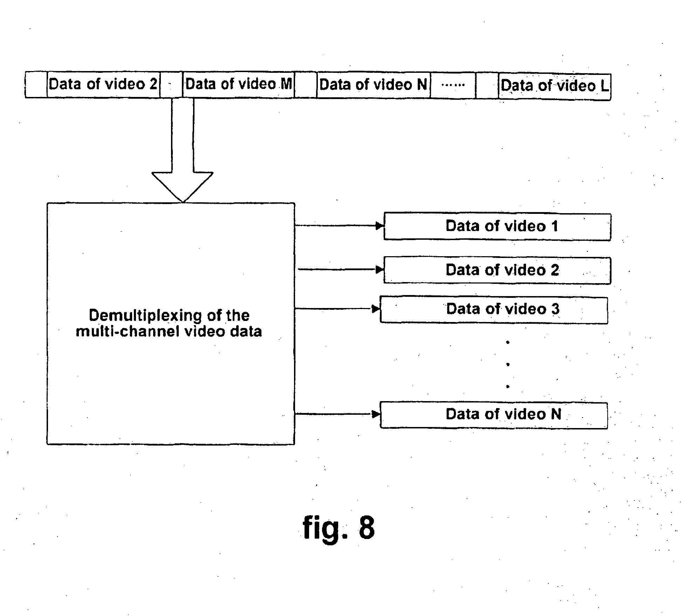

In step 735, the received data are demultiplexed to obtain two channels of real video bit stream. Figure 8 is the schematic diagram of de-multiplexing multi-channel video data in accordance with the embodiment, and the multiplexed data stream is demultiplexed by the demultiplexing unit of the multi-channel video, and the multi-channel video bit stream is output after dropping the packet header and the filling bytes. Specifically, searching for packet header is the first step in the demultiplexing, if the synchronization header, namely 0x47, is found out sequentially 5 times at the interval of 200 bytes, it means synchronization is obtained; if the synchronization header fails to be found out sequentially 3 times at the interval of 200 bytes, it means desynchronizing condition and the synchronization operation should be performed again. Information about a packet, such as which channel video it belongs to, how many true data it includes, and whether the data is sequential, should be determined according to the information of the packet header, and the valid data are respectively put into the output buffers of the corresponding channel video. But some error-processing steps, such as freezing, should be performed when the data are not sequential.

In step 740, the video data at the output buffers of the two channel video is extracted by the receiving terminals and transmitted to the decoding units of the two channels.

In step 745, the decoding units of the two channels decode the input video data, output the decoded video, and display it on TV.

Similarly, the transmission of more than two channels of video can be realized in reference with the above steps.

While the method of transmitting multi-channel video in the video conference systems in the present invention has been described in detail with specific reference to the exemplary embodiment, the description as set forth is not intended to be exhaustive or limit the scope of the invention. Many modification and variations are possible in light of the above teaching without departing from the scope of the present invention. Thus, the present invention should not be limited by any of the above described exemplary embodiments, but should be defined only in according with the following claims.

## Claims

1. A method of transmitting multi-channel video in video conference systems, **characterized in that** the method packages each channel video respectively to create a single data stream composing of several packets, and fills a frame structure with the data stream for transmission by:
multiplexing said multi-channel video by packaging each channel video respectively to generate a single data stream;
combining said data stream after multi-channel video multiplexing with other types of data to constitute a frame structure;
sending said frame structure to a receiving terminal via a transmitting channel;
demultiplexing the single video data stream in the frame structure received by said receiving terminal to extract video data of each channel.

2. The method according to claim 1, **characterized in that** before said step of multiplexing, there are steps of:
determining condition of time slots and sub-slots distributed to video data in the transmitting channel;
calculating a total bandwidth occupied by the video data according to the determined distribution condition of the time slot and sub-slot of video data;
determining number of channels for transmission and parameters of each channel video;
encoding each channel video according to the determined parameters of each channel video.

3. The method according to claim 2, **characterized in that** said step of determining time slots and sub-slots of video data is implemented between a sending terminal and a MCU or between receiving terminals via capability exchange process based on protocol H.320.

4. The method according to claim 2, **characterized in that** said step of determining the number of channels and parameters of each video is implemented between the receiving terminal and the MCU or between receiving terminals via an extended BAS code, the extended BAS code includes number of channels, bit rate and video format of each channel video.

5. The method according to claim 2, **characterized in that** said parameters of each video include bandwidth, video format, and the sum of bandwidth of each video is less than or equals to the calculated total bandwidth occupied by the video data.

6. The method according to claim 4, **characterized in that** in said step of encoding, the bit rate of encoding in transmitting each channel video is the bit rate of the channel video multiplied by a conversion coefficient to consider bandwidth occupied by a packet header when packaging the channel video data, wherein the conversion coefficient is less than or equal to: the maximum number of transmittable valid data bits in one packet / packet length.

7. The method according to claim 1, **characterized in that** said step of multiplexing further includes:
packaging data of each channel video into a packet with a fixed size;
mixing the packaged data of each channel video using packet as a unit to generate a single data stream.

8. The method according to claim 7, **characterized in that** said data packet of each channel video is composed of a packet header with a fixed length, video data and filling bytes.

9. The method according to claim 8, **characterized in that** said packet header includes:
synchronization bit, which indicates the beginning of the packet for synchronizing packets;
id, which indicates the type of the packet to distinguish which video channel the packet comes from;
serial number, which indicates the order of the packet of this type to detect whether this packet is sequential with previous packets in the video of the channel;
data length, which indicates the length of valid video data carried in the packet.

10. The method according to claim 9, **characterized in that** said serial number of the packet increases according to the order in which data of the channel video are packaged.

11. The method according to claim 8, **characterized in that** said filling bytes are used to fill a deficient part when the total length of the packet header and the video data does not reach said fixed length of the packet.

12. The method according to claim 2, **characterized in that** said step of composing the frame structure further includes:
filling the time slots and sub-slots corresponding to of the video data in the determined transmitting channel with the single data stream generated by multiplexing said multi-channel video;
composing H.221 frame by combining said video data and other types of data with signaling H.320.

13. The method according to claim 1, **characterized in that** before said step of demultiplexing, there are also steps of:
determining the condition of time slots and sub-slots distributed to the video data in the frame structure by said receiving terminal;
determining number of channels and parameters of each channel video transmitted by said receiving terminal.

14. The method according to claim 13, **characterized in that** said step of determining the condition of the time slots and sub-slots of video data is implemented between the receiving terminal and the MCU or between receiving terminals via a process of capability exchange of H.320 protocol.

15. The method according to claim 13, **characterized in that** said step of determining number of channels and parameters of each channel video is implemented between said receiving terminal and the MCU or between receiving terminals via the extended BAS code, which includes number of channels, code rate of each channel video, and video format.

16. The method according to claim 13, **characterized in that** said step of demultiplexing further comprises:
extracting the video data from the received frame structure according to the corresponding time slots and sub-slots of the determined video data by said receiving terminal;
searching in the extracted video data for packet header from each packet corresponding to each channel video by said receiving terminal;
extracting valid video data carried in the packet according to the packet header information of each said packet by said receiving terminal.

17. The method according to claim 16, **characterized in that** each packet of said video data is a packet with a fixed size, and each packet consists of a packet header with a fixed length, video data and filling bytes.

18. The method according to claim 16 or 17, **characterized in that** the packet header of each said packet includes:
synchronization bit, which indicates the beginning of the packet and is used for synchronizing the packets;
id, which indicates the type of the packet and distinguishes channel video from which the packet comes;
serial number, which indicates the order of the packet in said type and is used to detect whether the packet is sequential with previous packets in the channel video;
data length, which indicates the length of valid video data carried in the packet.

19. The method according to claim 1, **characterized in that** after said step of demultiplexing, there are still steps of:
decoding each channel video data obtained by demultiplexing the single video data in the received frame structure by said receiving terminal;
outputting each channel video data obtained by decoding by said receiving terminal.

## Patentansprüche

1. Verfahren zum Senden eines Mehrkanal-Videos in Videokonferenzsystemen, **dadurch gekennzeichnet, dass** das Verfahren jedes Kanalvideo entsprechend verpackt, um einen einzigen Datenstrom zu erzeugen, der aus verschiedenen Paketen zusammengesetzt ist und eine Rahmenstruktur mit dem Datenstrom füllt zur Sendung durch:
Multiplexieren des Mehrkanal-Videos durch die entsprechende Verpackung jedes Kanalvideos, um einen einzigen Datenstrom zu erzeugen;
Kombinieren des Datenstroms nach der Mulitkanal-Video-Multiplexierung mit anderen Arten von Daten, um eine Rahmenstruktur zu konstituieren;
Senden der Rahmenstruktur an ein Empfangsendgerät über einen Sendekanal;
Demultiplexieren des einzelnen Videodatenstroms in der Rahmenstruktur, empfangen vom Empfangsendgerät, um Videodaten aus jedem Kanal zu extrahieren.

2. Verfahren nach Anspruch 1, **dadurch gekennzeichnet, dass** vor dem Schritt des Multiplexierens die Folgenden Schritte durchgeführt werden:
Bestimmen des Zustands von Zeitschlitzen und Unterschlitzen, verteilt an Videodaten im Sendekanal,
Berechnen einer gesamten Bandbreite, die von den Videodaten gemäß des bestimmten Verteilungszustands des Zeitschlitzes und des Unterschlitzes von Videodaten belegt ist,
Bestimmen der Anzahl von Kanälen zum Senden und Parameter für jedes Kanalvideo;
Codieren jedes Kanalvideos gemäß den bestimmten Parametern jedes Kanalvideos.

3. Verfahren nach Anspruch 2, **dadurch gekennzeichnet, dass** der Schritt des Bestimmens von Zeitschlitzen und Unterschlitzen von Videodaten zwischen einem Sendeendgerät und einer MCU oder zwischen Empfangsendgeräten über einen Leistungsaustauschprozess basierend auf dem Protokoll H.320 implementiert wird.

4. Verfahren nach Anspruch 2, **dadurch gekennzeichnet, dass** der Schritt des Bestimmens der Anzahl von Kanälen und Parametern jedes Videos zwischen dem Empfangsendgerät und der MCU oder zwischen Empfangsendgeräten über einen erweiterten BAS-Code implementiert wird, wobei der erweiterte BAS-Code die Anzahl von Kanälen, die Bitrate und das Videoformat jedes Kanalvideos umfasst.

5. Verfahren nach Anspruch 2, **dadurch gekennzeichnet, dass** die Parameter jedes Videos die Bandbreite, das Videoformat umfassen und die Summe der Bandbreite jedes Videos kleiner als die oder gleich der berechneten gesamten Bandbreite ist, die von den Videodaten belegt ist.

6. Verfahren nach Anspruch 4, **dadurch gekennzeichnet, dass** in dem Schritt des Codierens die Bitrate des Codierens bei der Sendung jedes Kanalvideos die Bitrate des Kanalvideos, multipliziert durch einen Umwandlungskoeffizienten, ist, um die Bandbreite in Betracht zu ziehen, die von einem Paketkopfblock belegt ist, wenn die Kanalvideodaten verpackt werden, wobei der Umwandlungskoeffizient geringer als oder gleich wie Folgendes ist die maximale Anzahl von übertragbaren gültigen Datenbits in einem Paket/einer Paktlänge.

7. Verfahren nach Anspruch 1, **dadurch gekennzeichnet, dass** der Schritt des Multiplexierens weiter Folgendes umfasst:
Verpacken von Daten von jedem Kanalvideo in ein Paket mit einer festen Größe;
Mischen der verpackten Daten jedes Kanalvideos unter Verwendung eines Pakets als eine Einheit, um einen einzelnen Datenstrom zu erzeugen.

8. Verfahren nach Anspruch 7, **dadurch gekennzeichnet, dass** das Datenpaket jedes Kanalvideos aus einem Paketkopfblock mit einer festen Länge, Videodaten und Füllbytes zusammengesetzt ist.

9. Verfahren nach Anspruch 8, **dadurch gekennzeichnet, dass** jeder Paketkopfblock Folgendes umfasst:
ein Synchronisierungsbit, das den Beginn des Pakets für bei der Synchronisierung von Paketen angibt;
ebenso, das die Art des Pakets angibt, um zu unterscheiden, von welchem Videokanal das Paket stammt;
die Seriennummer, die die Reihenfolge des Pakets dieser Art angibt, um nachzuweisen, ob dieses Paket sequenziell mit vorhergehenden Paketen im Video des Kanals ist;
die Datenlänge, die die Länge von gültigen Videodaten angibt, die im Paket getragen werden.

10. Verfahren nach Anspruch 9, **dadurch gekennzeichnet, dass** sich die Seriennummer des Pakets je nach der Reihenfolge erhöht, in der die Daten des Kanalvideos verpackt sind.

11. Verfahren nach Anspruch 8, **dadurch gekennzeichnet, dass** die Füllbytes verwendet werden, um einen mangelhaften Teil zu füllen, wenn die gesamte Länge des Paketkopfblocks und der Videodaten die feste Länge des Pakets nicht erreicht.

12. Verfahren nach Anspruch 2, **dadurch gekennzeichnet, dass** der Schritt des Zusammensetzens der Rahmenstruktur weiter Folgendes umfasst:
Füllen der Zeitschlitze und der Unterschlitze, die den Videodaten im bestimmten Sendekanal entsprechen, mit dem einzelnen Datenstrom, der durch die Multiplexierung des Mehrkanalvideos erzeugt wird;
Zusammensetzen des H.221-Rahmens durch die Kombination der Videodaten mit anderen Arten von Daten mit der Signalisierung H.320.

13. Verfahren nach Anspruch 1, **dadurch gekennzeichnet, dass** vor dem Schritt des Demultiplexierens auch die Folgenden Schritte durchgeführt werden:
Bestimmen des Zustands von Zeitschlitzen und Unterschlitzen, die an die Videodaten in der Rahmenstruktur durch das Empfangsendgerät verteilt werden;
Bestimmen der Anzahl von Kanälen und Parametern jedes Kanalvideos, das durch den Empfangskanal gesendet wird.

14. Verfahren nach Anspruch 13, **dadurch gekennzeichnet, dass** der Schritt des Bestimmens des Zustands der Zeitschlitze und der Unterschlitze von Videodaten zwischen dem Empfangsendgerät und der MCU oder zwischen Empfangsendgeräten über einen Leistungsaustauschprozess des Protokolls H.320 implementiert wird.

15. Verfahren nach Anspruch 13, **dadurch gekennzeichnet, dass** der Schritt des Bestimmens der Anzahl von Kanälen und Parametern jedes Kanalvideos zwischen dem Empfangsendgerät und der MCU oder zwischen Empfangsendgeräten über den erweiterten BAS-Code implementiert wird, der die Anzahl von Kanälen, die Codrate jedes Kanalvideos und das Videoformat umfasst.

16. Verfahren nach Anspruch 13, **dadurch gekennzeichnet, dass** der Schritt des Multiplexierens weiter Folgendes umfasst:
Extrahieren der Videodaten aus der empfangenen Rahmenstruktur gemäß den entsprechenden Zeitschlitzen und Unterschlitzen der bestimmten Videodaten durch das Empfangsendgerät;
Suchen in den extrahierten Videodaten nach einem Paketkopfblock von jedem Paket, das jedem Kanalvideo entspricht, durch das Empfangsendgerät;
Extrahieren von gültigen Videodaten, durchgeführt im Paket gemäß der Paketkopfblock-Information jedes der Pakete durch das Empfangsendgerät.

17. Verfahren nach Anspruch 16, **dadurch gekennzeichnet, dass** jedes Paket der Videodaten ein Paket mit einer festen Größe ist, und jedes Paket aus einem Paketkopfblock mit einer festen Länge, Videodaten und Füllbytes besteht.

18. Verfahren nach Anspruch 16 oder 17, **dadurch gekennzeichnet, dass** der Paketkopfblick jedes der Pakete Folgendes umfasst:
ein Synchronisierungsbit, das den Beginn des Pakets angibt und für die Synchronisierung der Pakete verwendet wird;
ebenso, das die Art des Pakets angibt und das Kanalvideo unterscheidet, von dem das Paket stammt;
die Seriennummer, die die Reihenfolge des Pakets in der Art angibt und verwendet wird, um nachzuweisen, ob das Paket sequenziell mit vorhergehenden Paketen im Kanalvideo ist;
die Datenlänge, die die Länge von gültigen Videodaten angibt, die im Paket getragen werden.

19. Verfahren nach Anspruch 1, **dadurch gekennzeichnet, dass** nach dem Schritt des Demultiplexierens noch die Folgenden Schritte durchgeführt werden:
Decodieren aller Kanalvideodaten, die durch die Multiplexierung der einzelnen Videodaten in der erhaltenen Rahmenstruktur durch das Empfangsendgerät erhalten werden;
Ausgeben aller Kanalvideodaten, die durch die Decodierung durch das Empfangsendgerät erhalten werden.

## Revendications

1. Procédé de transmission de vidéo multicanaux dans des systèmes de visioconférence, **caractérisé en ce que** le procédé compile chaque vidéo de canal respectivement pour créer un flux de données unique constitué de plusieurs paquets, et remplit une structure de trame avec le flux de données en vue d'une transmission par :
multiplexage de ladite vidéo multicanaux en compilant chaque vidéo de canal respectivement pour générer un flux de données unique ;
combinaison dudit flux de données après multiplexage de la vidéo multicanaux avec d'autres types de données pour constituer une structure de trame ;
envoi de ladite structure de trame à un terminal de réception via un canal d'émission ;
démultiplexage du flux de données vidéo unique dans la structure de trame reçue par ledit terminal de réception pour extraire les données vidéo de chaque canal.

2. Procédé selon la revendication 1, **caractérisé en ce qu'**avant ladite étape de multiplexage, se produisent les étapes suivantes :
détermination de condition d'intervalles et de sous-intervalles de temps distribués aux données vidéo dans le canal d'émission ;
calcul d'une largeur de bande totale occupée par les données vidéo en fonction de la condition de distribution déterminée de l'intervalle et du sous-intervalle de temps des données vidéo ;
détermination du nombre de canaux de transmission et de paramètres de chaque vidéo de canal ;
codage de chaque vidéo de canal en fonction des paramètres déterminés de chaque vidéo de canal.

3. Procédé selon la revendication 2, **caractérisé en ce que** ladite étape de détermination d'intervalles et de sous-intervalles de temps de données vidéo est mise en oeuvre entre un terminal d'envoi et une MCU ou entre des terminaux de réception par le biais d'un processus d'échange de capacités basé sur le protocole H.320.

4. Procédé selon la revendication 2, **caractérisé en ce que** ladite étape de détermination du nombre de canaux et de paramètres de chaque vidéo est mise en oeuvre entre le terminal de réception et la MCU ou entre les terminaux de réception par le biais d'un code BAS étendu, le code BAS étendu incluant le nombre de canaux, le débit binaire et le format vidéo de chaque vidéo de canal.

5. Procédé selon la revendication 2, **caractérisé en ce que** lesdits paramètres de chaque vidéo incluent la largeur de bande, le format vidéo et la somme des largeurs de bande de chaque vidéo est inférieure ou égale à la largeur de bande totale calculée occupée par les données vidéo.

6. Procédé selon la revendication 4, **caractérisé en ce que** dans ladite étape de codage, le débit binaire de codage dans la transmission de chaque vidéo de canal est le débit binaire de la vidéo de canal multiplié par un coefficient de conversion pour considérer la largeur de bande occupée par un en-tête de paquet lors de la compilation des données vidéo de canal, dans lequel le coefficient de conversion est inférieur ou égal au nombre maximal de bits de données valides pouvant être transmises dans un paquet/une longueur de paquet.

7. Procédé selon la revendication 1, **caractérisé en ce que** ladite étape de multiplexage inclut en outre :
la compilation de données de chaque vidéo de canal dans un paquet de taille fixe ;
le mélange des données compilées de chaque vidéo de canal en utilisant un paquet comme unité pour générer un flux de données unique.

8. Procédé selon la revendication 7, **caractérisé en ce que** ledit paquet de données de chaque vidéo de canal est composé d'un en-tête de paquet de longueur fixe, de données vidéo et d'octets de remplissage.

9. Procédé selon la revendication 8, **caractérisé en ce que** ledit en-tête de paquet inclut :
un bit de synchronisation, qui indique le début du paquet pour synchroniser les paquets ;
une id, qui indique le type du paquet pour repérer de quel canal vidéo vient le paquet ;
un numéro de série, qui indique l'ordre du paquet de ce type pour détecter si ce paquet est en séquence avec les paquets précédents dans la vidéo du canal ;
une longueur de données, qui indique la longueur des données vidéo valides transportées dans le paquet.

10. Procédé selon la revendication 9, **caractérisé en ce que** ledit numéro de série du paquet augmente en fonction de l'ordre dans lequel les données de la vidéo de canal sont compilées.

11. Procédé selon la revendication 8, **caractérisé en ce que** lesdits octets de remplissage sont utilisés pour remplir une partie incomplète lorsque la longueur totale de l'en-tête de paquet et des données vidéo n'atteint pas ladite longueur fixe du paquet.

12. Procédé selon la revendication 2, **caractérisé en ce que** ladite étape de composition de la structure de trame inclut en outre :
le remplissage des intervalles et sous-intervalles de temps correspondant aux données vidéo dans le canal d'émission déterminé avec le flux de données unique généré en multiplexant ladite vidéo multicanaux ;
la composition de la trame H.221 en combinant lesdites données vidéo et d'autres types de données avec la signalisation H.320.

13. Procédé selon la revendication 1, **caractérisé en ce qu'**avant ladite étape de démultiplexage, se produisent également les étapes suivantes :
détermination de la condition d'intervalles et de sous-intervalles de temps distribués aux données vidéo dans la structure de trame par ledit terminal de réception ;
détermination du nombre de canaux et de paramètres de chaque vidéo de canal transmis par ledit terminal de réception.

14. Procédé selon la revendication 13, **caractérisé en ce que** ladite étape de détermination de la condition d'intervalles et de sous-intervalles de temps de données vidéo est mise en oeuvre entre le terminal de réception et la MCU ou entre les terminaux de réception par le biais d'un processus d'échange de capacités de protocole H.320.

15. Procédé selon la revendication 13, **caractérisé en ce que** ladite étape de détermination du nombre de canaux et de paramètres de chaque vidéo de canal est mise en oeuvre entre ledit terminal de réception et la MCU ou entre les terminaux de réception par le biais du code BAS étendu, qui inclut le nombre de canaux, le débit de codage de chaque vidéo de canal et le format vidéo.

16. Procédé selon la revendication 13, **caractérisé en ce que** ladite étape de démultiplexage comprend en outre :
l'extraction des données vidéo de la structure de trame reçue en fonction des intervalles et sous-intervalles de temps correspondants des données vidéo déterminées par ledit terminal de réception ;
la recherche dans les données vidéo extraites de l'en-tête de paquet de chaque paquet correspondant à chaque vidéo de canal par ledit terminal de réception ;
l'extraction de données vidéo valides transportées dans le paquet en fonction des informations d'en-tête de paquet de chaque dit paquet par ledit terminal de réception.

17. Procédé selon la revendication 16, **caractérisé en ce que** chaque paquet desdites données vidéo est un paquet de taille fixe, et chaque paquet est constitué d'un en-tête de paquet ayant une longueur fixe, de données vidéo et d'octets de remplissage.

18. Procédé selon la revendication 16 ou 17, **caractérisé en ce que** l'en-tête de paquet de chaque dit paquet inclut :
un bit de synchronisation, qui indique le début du paquet et est utilisé pour synchroniser les paquets ;
une id, qui indique le type du paquet et repère le canal vidéo d'où vient le paquet ;
un numéro de série, qui indique l'ordre du paquet dans ledit type et est utilisé pour détecter si le paquet est en séquence avec les paquets précédents dans la vidéo de canal ;
une longueur de données, qui indique la longueur des données vidéo valides transportées dans le paquet.

19. Procédé selon la revendication 1, **caractérisé en ce qu'**après ladite étape de démultiplexage, se produisent encore les étapes suivantes :
décodage de chaque donnée de vidéo de canal obtenue par démultiplexage des données vidéo uniques dans la structure de trame reçue par ledit terminal de réception ;
sortie de chaque donnée vidéo de canal par décodage par ledit terminal de réception.
